# EUROPEAN PATENT APPLICATION

(11) **EP 4 475 265 A1**
(43) Date of publication of application: **11.12.2024**
(21) Application number: 23178360.6
(22) Date of filing: 09.06.2023
(51) Int. Cl.: H01M 10/42, H01M 10/48, H01M 50/30

(54) **BATTERY CELL MONITORING**

(71) Applicant: Volvo Truck Corporation, 405 08 Göteborg (SE)
(72) Inventor: CHOI, Youngjin, 421 73 Västra Frölunda (SE); TINTIGNAC, Sophie, 418 71 Göteborg (SE); HAMRIN, Alice, 417 06 Göteborg (SE); GISKE, Gustav, 121 54 Johanneshov (SE)
(74) Representative: Ström & Gulliksson AB

(57) **Abstract**

A system for monitoring a battery cell, the system comprising a deformation detector configured to be arranged at a distance from a vent portion of the battery cell when the vent portion is in a non-deformed position and configured to detect a deformation of the vent portion; and processing circuity for determining if the detected deformation meets a threshold deformation.

## Description

### TECHNICAL FIELD

The disclosure relates generally to battery cells. In particular aspects, the disclosure relates to battery cell monitoring, in particular systems and methods for predicting venting of a battery cell. The disclosure can be applied to heavy-duty vehicles, such as trucks, buses, and construction equipment, among other vehicle types. The disclosure can also be applied to marine vessels, such as water crafts, motorboats, work boats, sport vessels, boats, ships, among other vessel types. The disclosure can also be applied to test environments for batteries. Although the disclosure may be described with respect to a particular implementation, the disclosure is not restricted to any particular implementation.

### BACKGROUND

Battery electric vehicles serve as an environmentally sustainable alternative to combustion engines that run on fossil fuels. Several companies in the heavy vehicle industry aim to reach a point in the near future where they only sell and produce vehicle combinations that use electrical power as the main source of propulsion. In battery electric vehicles, batteries are installed to power electric motors and provide propulsion. Rechargeable batteries are therefore becoming more and more prevalent in the automotive industry.

There are three principal types of battery cell that are used in rechargeable battery packs for vehicles: cylindrical cells, prismatic cells, and pouch cells. Such battery cells must be safe to use. To achieve this, some rechargeable battery cells have one or more vents. A vent is a mechanical part of the cap assembly of a battery that enables the release of gases and other material from inside the battery when the pressure inside the battery rises above an allowed level. This ensures catastrophic failure of the battery cell is prevented.

However, in many cases, hazardous or toxic material, such as methine group gases, carbonyl group gases, hydrogen fluoride, and the like, is released from the cell during venting. This means that other components of the battery pack can be contaminated or damaged by released material. For example, in a lithium-ion battery, residual lithium salts, e.g. LiPF6, included in the electrolyte of the battery cell can react with moisture in the atmosphere to form hydrogen fluoride, leading to corrosion of mechanical parts of the battery pack. Even in the case of cell testing, where a battery cell is kept in a climate chamber, toxic material can be released and contaminate or damage the chamber itself.

It is therefore desired to develop a solution for battery cell venting that addresses or at least mitigates some of these issues.

### SUMMARY

This disclosure attempts to address the problems noted above by providing systems, methods and other approaches for monitoring vent deformation throughout the life span of a battery cell to protect battery packs and test facilities from cell venting. By monitoring the deformation of a cell vent, early detection of potential cell venting can be provided, as opposed to current sensing methods that focus on detecting cell venting events after they have occurred. This approach enables action to be taken before venting, ensuring that contamination or damage of the surroundings of the cell can be avoided.

According to an aspect of the disclosure, there is provided a system for monitoring a battery cell, the system comprising a deformation detector configured to be arranged at a distance from a vent portion of the battery cell when the vent portion is in a non-deformed position and configured to detect a deformation of the vent portion, and processing circuity for determining if the detected deformation meets a threshold deformation.

This enables early detection of potential cell venting, which ensures that action can be taken before potentially dangerous material is discharged from the cell and causes damage or contamination of the surrounding environment, for example parts of a battery pack or test facility. By implementing a deformation detector arranged at a distance from a vent portion, the monitoring can be performed without interfering with the structure of the vent portion and hindering its primary safety function.

Optionally, the deformation detector comprises at least one contact sensor configured to contact the vent portion when the vent portion is in a deformed position. This provides a simple mechanism for detecting deformation of the vent portion.

Optionally, the at least one contact sensor is disposed in a cantilevered arrangement. This enables the arrangement of a deformation detector that does not interfere with the structure of the vent portion.

Optionally, the at least one contact sensor is disposed in a cantilevered arrangement from a housing of the battery cell. This provides an integrated design for a battery cell that enables early detection of potential cell venting without interfering with the structure and function of the vent portion.

Optionally, the distance corresponds to the threshold deformation. This provides a simple structure for instantly detecting a threshold deformation.

Optionally, the deformation detector comprises at least one non-contact sensor configured to detect a deformation of the vent portion. This enables the arrangement of a deformation detector that does not interfere with the structure and function of the vent portion.

Optionally, the non-contact sensor comprises an optical sensor or a laser sensor. This enables different devices to be used, for example in implementations requiring different levels of precision.

Optionally, the deformation detector comprises a plurality of sensors. This enables the deformation to be determined at a number of positions of the vent portion, providing more reliable detection.

Optionally, the threshold deformation corresponds to a deformation of the vent portion less than a deformation required for venting of the battery cell. This enables early detection of potential cell venting, which ensures that action can be taken before potentially dangerous material is discharged from the cell and causes damage or contamination of surrounding parts of a battery pack or test facility.

Optionally, the threshold deformation is determined based on experimental or model data. This enables thresholds to be determined accurately for specific use cases.

Optionally, the threshold deformation comprises a plurality of threshold deformations. This enables different parts of the vent portion to undergo different levels of deformation before an action is taken.

Optionally, the vent portion is provided on an end side of the battery cell comprising one or more electrical terminals. This enables venting of the battery cell to be directed in a particular direction, for example away from sensitive components.

Optionally, the battery cell is a prismatic cell, a cylindrical cell, or a pouch cell. This enables early detection of potential cell venting in a number of different types of cell.

Optionally, the battery cell is comprised in a battery pack for a vehicle. This enables components of a battery pack and a vehicle to be protected through detection of cell venting.

According to an aspect of the disclosure, there is provided vehicle comprising the system.

Optionally, the battery cell is in a test environment. This enables components of a test environment to be protected through detection of cell venting.

According to an aspect of the disclosure, there is provided a method for monitoring a battery cell, the method comprising determining a deformation of a vent portion of the battery cell at a deformation detector arranged at a distance from a vent portion, and determining if the detected deformation meets a threshold deformation.

This enables early detection of potential cell venting, which ensures that action can be taken before potentially dangerous material is discharged from the cell and causes damage or contamination of surrounding parts of a battery pack or test facility. This can be performed without interfering with the structure of the vent portion and hindering its primary safety function.

Optionally, the method comprises determining the deformation using at least one contact sensor of the deformation detector. This provides a simple mechanism for detecting deformation of the vent portion.

Optionally, the method comprises determining the deformation using at least one non-contact sensor of the deformation detector. This enables early detection of potential cell venting without interfering with the structure and function of the vent portion.

Optionally, the method further comprises taking an action to prevent venting of the battery cell in response to determining that the detected deformation meets the threshold deformation. This enables surrounding parts of a battery pack or test facility to be protected as discharge of potentially dangerous material can be prevented.

Optionally, taking an action comprises electrically disconnecting the battery cell. This enables venting to be prevented, thus protecting surrounding parts of a battery pack or test facility from discharge of potentially dangerous material.

According to an aspect of the disclosure, there is provided a computer-implemented method comprising, by processing circuitry of a computer system, receiving a signal representing a deformation of a vent portion of the battery cell from a deformation detector arranged at a distance from a vent portion, and determining if the detected deformation meets a threshold deformation.

This enables early detection of potential cell venting, which ensures that action can be taken before potentially dangerous material is discharged from the cell and causes damage or contamination of surrounding parts of a battery pack or test facility. This can be performed without interfering with the structure of the vent portion and hindering its primary safety function.

Optionally, the computer-implemented method further comprises taking an action to prevent venting of the battery cell in response to determining that the detected deformation meets the threshold deformation, for example sending a signal to electrically disconnect the battery cell. This enables surrounding parts of a battery pack or test facility to be protected as discharge of potentially dangerous material can be prevented.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above-discussed technical benefits.

### BRIEF DESCRIPTION OF THE DRAWINGS

With reference to the appended drawings, below follows a more detailed description of aspects of the disclosure cited as examples.
**FIGs. 1A** to **1C** illustrate example battery cells.
**FIGs. 2A** to **2C** schematically show cross-sectional views of an example battery cell undergoing venting.
**FIG. 3** schematically shows an example system for monitoring a battery cell.
**FIGs. 4A** and **4B** schematically show cross-sectional views of an example deformation detector of a system for monitoring a battery cell.
**FIGs. 5A** and **5B** schematically show cross-sectional views of another example deformation detector of a system for monitoring a battery cell.
**FIGs. 6A** and **6B** schematically show cross-sectional views of another example deformation detector of a system for monitoring a battery cell.
**FIGs. 7A** and **7B** schematically show cross-sectional views of another example deformation detector of a system for monitoring a battery cell.
**FIGs. 8A** to **8C** schematically show cross-sectional views of another example deformation detector of a system for monitoring a battery cell.
**FIG. 9** is a flow chart of an example method for monitoring a battery cell.
**FIG. 10** is a flow chart of an example computer-implemented method for monitoring a battery cell.
**FIG. 11** is a schematic diagram of a computer system for implementing examples disclosed herein.

Like reference numerals refer to like elements throughout the description.

### DETAILED DESCRIPTION

Aspects and examples set forth below represent the necessary information to enable those skilled in the art to practice the disclosure.

Many present day battery cells include one or more vents for releasing pressure inside the battery when it rises above an allowed level. This ensures catastrophic failure of the battery cell is prevented. However, cell venting can result in hazardous or toxic material being released from the cell, meaning that surrounding components can be contaminated or damaged.

To remedy this, systems, methods and other approaches are provided for monitoring vent deformation throughout the life span of a battery cell. By monitoring the shape or deformation of a cell vent early, detection of potential cell venting can be provided, as opposed to current sensing methods that focus on detecting cell venting events after they have occurred. This enables contamination or damage of the surroundings of the cell to be avoided, for example during vehicle operation or cell testing. By implementing a deformation detector arranged at a distance from a vent portion, the monitoring can be performed without interfering with the structure and function of the vent portion and hindering its primary safety function, meaning that venting can still occur if necessary.

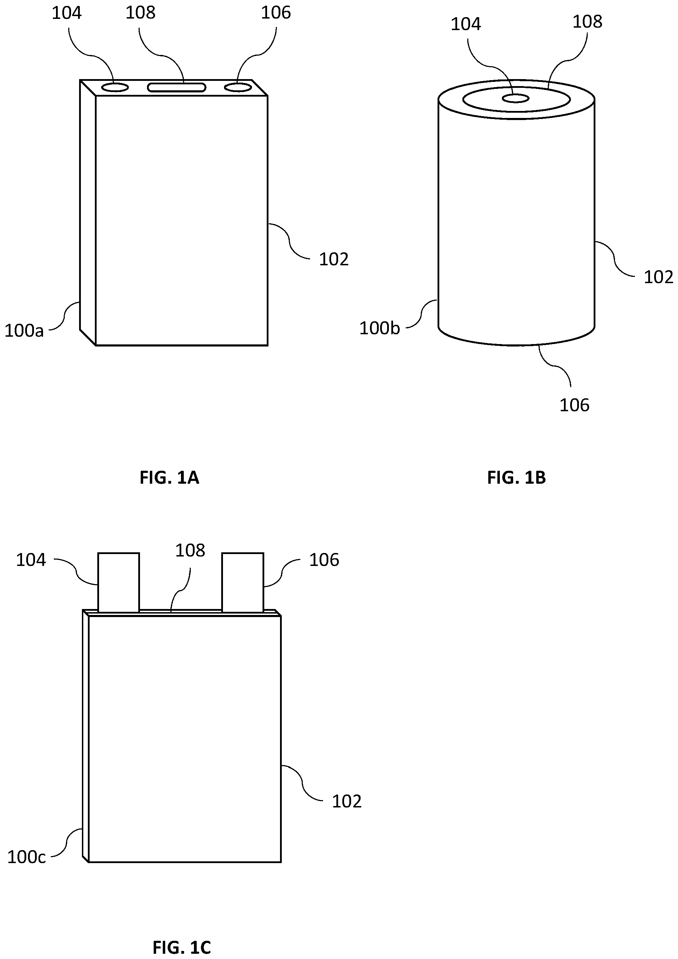

**FIGs. 1A** to **1C** illustrate example battery cells **100.** **FIG. 1A** illustrates a prismatic battery cell **100a,** **FIG. 1B** illustrates a cylindrical battery cell **100b,** and **FIG. 1C** illustrates a pouch battery cell **100c.** Such battery cells **100** can be used in battery packs for vehicles, for example for providing power to electric motors and other electrically driven components of the vehicle. Before implementation, the battery cells **100** may be subject to testing, for example in a climate chamber, to observe the behaviour of the cell **100** over time and under different conditions.

Each battery cell **100** comprises a housing **102** configured to enclose components such as electrode rolls and current collecting plates, as known in the art. Each battery cell **100** comprises a positive terminal **104** and a negative terminal **106** for providing electrical connections to the battery cells **100.**

Each battery cell **100** also comprises a vent portion **108.** The vent portion **108** is configured to break or become detached if the pressure inside the battery cell **100** reaches a threshold value. When this occurs, an opening is provided through which gas and/or other material can be released out of the battery cell **100** to prevent catastrophic failure of the cell **100.** In **FIGs. 1A** to **1C****,** the vent portions **108** are provided on an end side of the battery cells 100 comprising one or more of the electrical terminals **104, 106,** but it will be appreciated that the vent portion **108** can be located at any suitable part of the cell **100,** for example to ensure that discharged material is directed away from sensitive components.

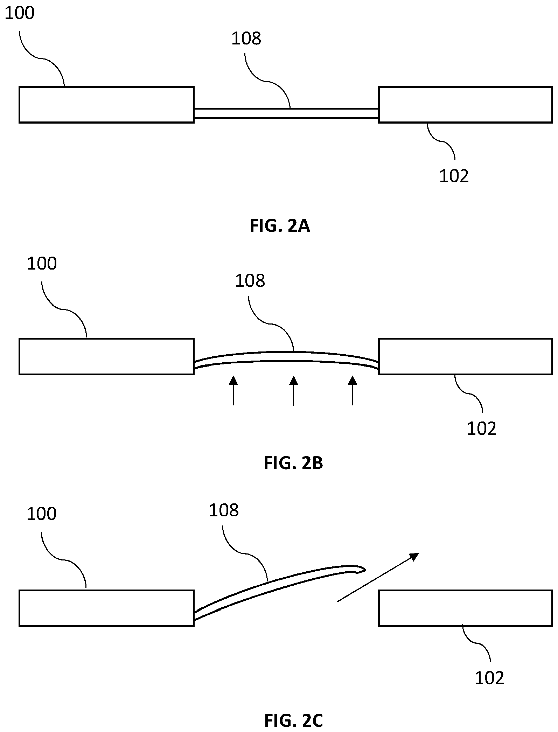

**FIGs. 2A** to **2C** schematically show cross-sectional views of an example battery cell 100 undergoing venting. In particular, **FIGs. 2A** to **2C** show a cross-section of the top of the prismatic cell **100a** shown in **FIG. 1A****,** although it will be appreciated that the same principles apply to any type of battery cell **100** shown in **FIGs. 1A** to **1C****.**

In **FIG. 2A****,** the battery cell **100** is undergoing normal operation, and the vent portion **108** is in a resting position as the pressure in the cell **100** is at a normal level. In **FIG. 2B****,** the pressure is the battery cell **100** has increased, for example due to a malfunction in the cell **100** such as thermal runaway. As shown in **FIG. 2B****,** the vent portion **108** has been deformed by the increase in pressure inside the battery cell **100.** This may occur suddenly or gradually over the life span of the battery cell **100.** In **FIG. 2C****,** the pressure is the battery cell **100** has increased to a threshold level at which the vent portion **108** becomes detached from the housing **102.** There are various mechanisms by which a vent portion **108** of a battery cell **100** may function that are known in the art and will not be discussed in detail here. Gas and other material from inside the housing **102** of the battery cell **100** is then able to escape. As discussed above, the released material may be hazardous or toxic, and may cause damage or contamination of surrounding components.

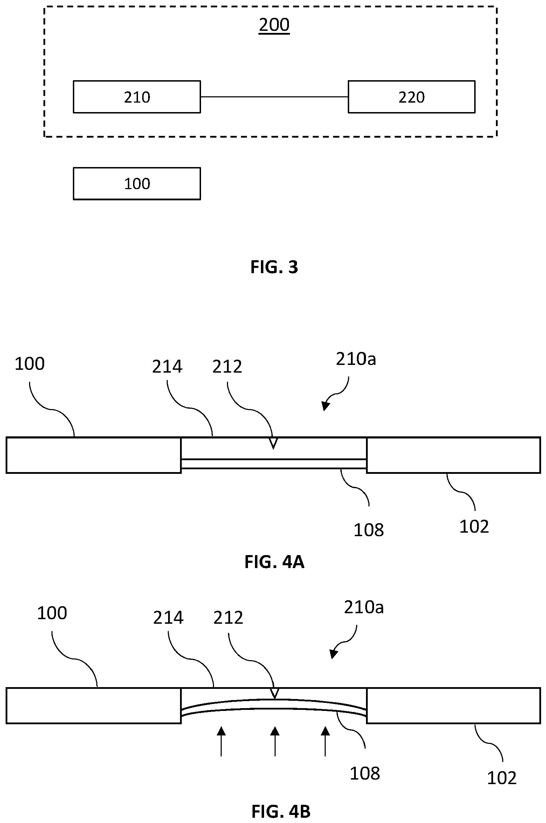

In order to provide early detection of potential cell venting, a system **200** is provided as shown in **FIG. 3****.** The system comprises a deformation detector **210** associated with a battery cell **100** and processing circuity **220** configured to determine if a deformation detected by the deformation detector **210** meets a threshold deformation.

The deformation detector **210** is configured to be arranged at a distance from a vent portion **108** of the battery cell **100** when the vent portion **108** is in a non-deformed position, and is configured to determine when the vent portion **108** is being deformed by increased pressure inside the battery cell **100** (as shown in **FIG. 2B****).** The deformation detector **210** will be explained in more detail in relation to **FIGs. 4** to **8****.**

The deformation detector **210** is communicably connected to the processing circuity **220** such that a detection signal can be provided from the deformation detector **210** to the processing circuity **220.** The connection may be a wired, wireless, or network connection, as known in the art. The processing circuity **220** may be located locally to or remotely from the deformation detector **210.** For example, the processing circuity **220** may be part of a battery management system (BMS) of a vehicle or a test facility, or may be integrated with the deformation detector.

The processing circuity **220** is configured to determine if a deformation detected by the deformation detector **210** meets a threshold deformation. The threshold deformation can be set to correspond to a deformation of the vent portion **108** that is less than a deformation required for venting of the battery cell **100.** In this way, it can be determined that the vent portion **108** is being deformed and action can be taken before venting occurs.

The threshold deformation can be determined in terms of the inner pressure of the battery cell **100** and a shape change of the vent portion **108.** This can be determined based on experimental or model data. For example, a threshold deformation could be determined by increasing the pressure in the cell **100** (e.g. by gas injection to a model cell) or by mechanical simulation of a specific pressure on the vent portion **108,** and monitoring the behavior of the vent portion **108,** i.e. determining a maximum deformation before the vent portion **108** breaks or detaches. This enables thresholds to be determined accurately for specific use cases.

In some examples, the system **200** may further comprise a sensor disposed on the vent portion **108.** For example, the system **200** may comprise at least one of a pressure sensor or a strain gauge disposed on the vent portion **108.** This provides a redundancy in the system **210,** for example in case the deformation detector **210** malfunctions. However, such solutions may potentially interfere with the primary safety function of the vent portion **108** by hindering movement of the vent portion **108.**

The system **200** shown in **FIG. 3** enables vent deformation to be monitored throughout the life span of a battery cell **100.** This provides for early detection of potential cell venting which enables action to be taken to protect battery packs and test facilities from contamination or damage due to cell venting. By implementing a deformation detector arranged at a distance from a vent portion, the monitoring can be performed without interfering with the structure and function of the vent portion and hindering its primary safety function, meaning that venting can still occur if necessary. As another advantage, deformation of a vent portion could be used as an indicator to replace aged cells by determining a cell aging state from the monitored deformation.

Examples of different deformation detectors **210** are shown in **FIGs. 4** to **8****.** As discussed above, the deformation detectors **210** are configured to be arranged at a distance from a vent portion **108** of the battery cell **100** when the vent portion **108** is in a non-deformed position. The deformation detectors **210** are configured to determine when the vent portion **108** is being deformed by increased pressure inside the battery cell **100.**

**FIGs. 4A** and **4B** schematically show cross-sectional views of a first example deformation detector **210a** of a system for monitoring a battery cell **100.** The deformation detector **210a** comprises a contact sensor **212** arranged on a support **214.** The contact sensor **212** may comprise a sensor for surface roughness monitoring, a strain gauge, or any suitable type of contact sensor for monitoring deformation of the vent portion **108.** The deformation detector **210a,** and in particular the contact sensor **212,** is arranged at a distance from the vent portion 108 of the battery cell **100** when the vent portion **108** is in the non-deformed position, as shown in **FIG. 4A****.** Whilst the contact sensor **212** is shown having a profile extending below the support **214,** this is for illustration purposes only and it will be appreciated that the contact sensor could have a smaller profile, or even be flush with the lower surface of the support **214,** as long as it is capable of detecting contact.

As shown in **FIG. 4B****,** when the vent portion **108** is in a sufficiently deformed position, the contact sensor **212** contacts the vent portion **108.** The contact sensor **212** is therefore enabled to detect a deformation of the vent portion **108.** The detected deformation can then be transmitted to the processing circuity **220,** which can compare the deformation to a threshold deformation, as described in relation to **FIG. 3****.**

In one example, the distance between the deformation detector **210a,** in particular the contact sensor **212,** and the vent portion **108** when the vent portion **108** is in the non-deformed position corresponds to the threshold deformation. In this way, when the vent portion **108** undergoes a deformation of a sufficient distance to contact the contact sensor **212,** it can be immediately determined that the vent portion **108** has undergone a deformation at or above the threshold deformation and a corresponding action can be taken.

In another example, the distance between the deformation detector **210a,** in particular the contact sensor **212,** and the vent portion **108** when the vent portion **108** is in the non-deformed position may be less than the threshold deformation. In this way, a tolerance may be provided for detection of the deformation, which can ensure that false negative determinations are avoided. The contact sensor **212** may be a pressure sensor, and the processing circuity **220** may use the pressure at the non-deformed position of the vent portion **108** as a zero-level for detecting the deformation. The measured pressure can then be correlated with a deformation distance, enabling the threshold deformation to be detected.

The contact sensor **212** shown in **FIG. 4A** is disposed in a position substantially corresponding to the centre of the vent portion **108.** Due to the structure of the vent portion **108** and its attachment to the housing **102,** this is likely to be the position where the most deformation occurs. However, it will be appreciated that the contact sensor **212** could be attached in any suitable position along the length of the support **214** in order to correspond to different positions of the vent portion **108,** for example dependent on how the vent portion **108** is structured and configured to operate. In particular, the contact sensor **212** may be disposed in a position substantially corresponding to the position of expected maximum deformation of the vent portion **108.**

The support **214** may be a disc, plate, or arm configured to hold the contact sensor **212** in a given position. The support **214** shown in **FIG. 4A** is attached to the housing **102** of the battery cell **100.** This provides an integrated design for a battery cell **100** and deformation detector **210a.** It will be appreciated that the support **214** could be attached to another part of a battery pack or test environment that maintains the contact sensor **212** at a distance from the non-deformed position of the vent portion **108.** For example, any suitable design of the cap assembly or module top cover of the battery cell **100** may be employed. The support **214** can be configured to enable venting from the vent portion **108** (i.e. it is configured not to block the discharge of material from the vent portion **108),** such that it does not hinder the primary safety function of the vent portion **108.** This could be achieved in a number of ways, for example by providing a thin support arm or providing holes in a support plate or disc.

It will also be appreciated that, as the vent portion **108** can be located at any suitable part of the battery cell **100** as discussed above, for example to ensure that discharged material is directed away from sensitive components in the area surrounding the battery cell **100,** the deformation detector **210** may be located at any suitable corresponding location.

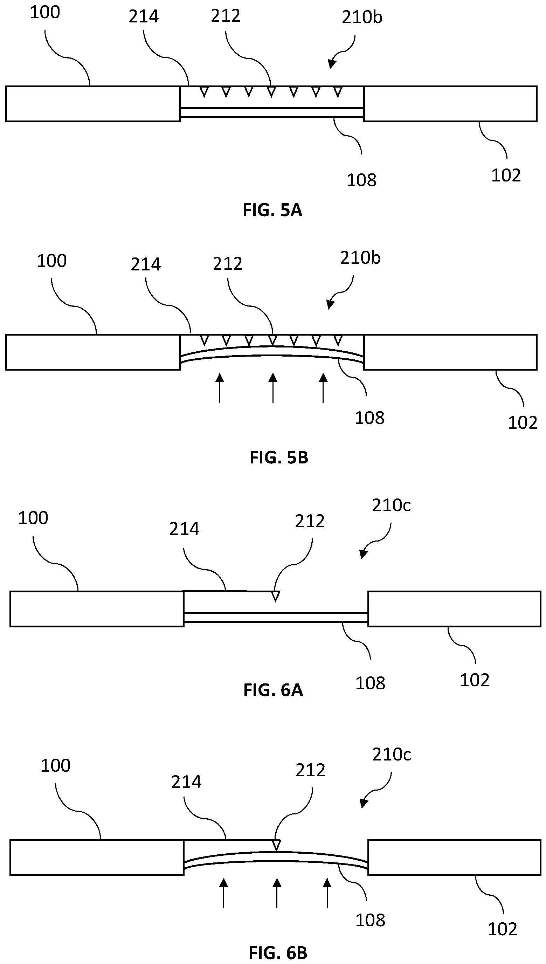

**FIGs. 5A** and **5B** schematically show cross-sectional views of a second example deformation detector **210b** of a system for monitoring a battery cell **100.** As shown in **FIG. 5A****,** the deformation detector **210b** comprises a plurality of contact sensors **212** arranged at different locations on the support **214.** Similarly to **FIG. 4A****,** the deformation detector **210b,** and in particular the contact sensors **212,** is arranged at a distance from the vent portion **108** of the battery cell **100** when the vent portion **108** is in the non-deformed position. The distance between the deformation detector **210b,** in particular the contact sensors **212,** and the vent portion **108** when the vent portion **108** is in the non-deformed position may correspond to a threshold deformation or may be less than the threshold deformation, as discussed above.

As shown in **FIG. 5B****,** when the vent portion **108** is in a sufficiently deformed position, one or more of the contact sensors **212** contact the vent portion **108.** The contact sensors **212** are therefore enabled to detect a deformation of the vent portion **108.** By implementing a plurality of contact sensors **212** arranged at different locations, irregular or unpredictable deformation of the vent portion **108** can be detected. It will be appreciated that the plurality of contact sensors **212** can be arranged in any suitable form on the support **214,** for example in a line, a circle, a pattern, and the like, dependent on the structure of the support **214** or the expected points of deformation of the vent portion **108.** Whilst seven non-contact sensors **212** are shown, it will be appreciated that any suitable number of contact sensors **212** may be provided.

**FIGs. 6A** and **6B** schematically show cross-sectional views of a third example deformation detector **210c** of a system for monitoring a battery cell **100.** As shown in **FIG. 6A****,** the deformation detector **210c** comprises a contact sensor **212** arranged on a cantilevered support **214.** This enables the arrangement of a deformation detector that does not interfere with the structure and function of the vent portion **108,** as the support only extends in one direction from the contact sensor **212.** Similarly to **FIGs. 4A** and **5A****,** the deformation detector **210c,** and in particular the contact sensor **212,** is arranged at a distance from the vent portion **108** of the battery cell **100** when the vent portion **108** is in the non-deformed position, which may correspond to a threshold deformation or may be less than the threshold deformation.

As shown in **FIG. 6B****,** when the vent portion **108** is in a sufficiently deformed position, the contact sensor **212** contacts the vent portion **108.** The contact sensor **212** is therefore enabled to detect a deformation of the vent portion **108.** In the case that action is not taken in sufficient time to prevent venting, the structure of the deformation detector **210c** enables the vent portion to break or become detached from the housing **102** to enable pressure to be released, as shown in **FIG. 2C****.**

Similarly to **FIG. 4A****,** the contact sensor **212** shown in **FIG. 6A** is disposed in a position corresponding substantially to the centre of the vent portion **108,** although it will be appreciated that the contact sensor **212** could be attached in any suitable position along the length of the support **214.** The support **214** may be a plate or arm configured to hold the contact sensor **212** in a given position in a cantilevered form.

The support **214** shown in **FIG. 6A** is attached to the housing **102** of the battery cell 100. This provides an integrated design for a battery cell **100** and deformation detector **210c.** It will be appreciated that the support **214** could be attached to another part of a battery pack or test environment that maintains the contact sensor **212** at a distance from the non-deformed position of the vent portion **108.** For example, any suitable design of the cap assembly or module top cover of the battery cell **100** may be employed.

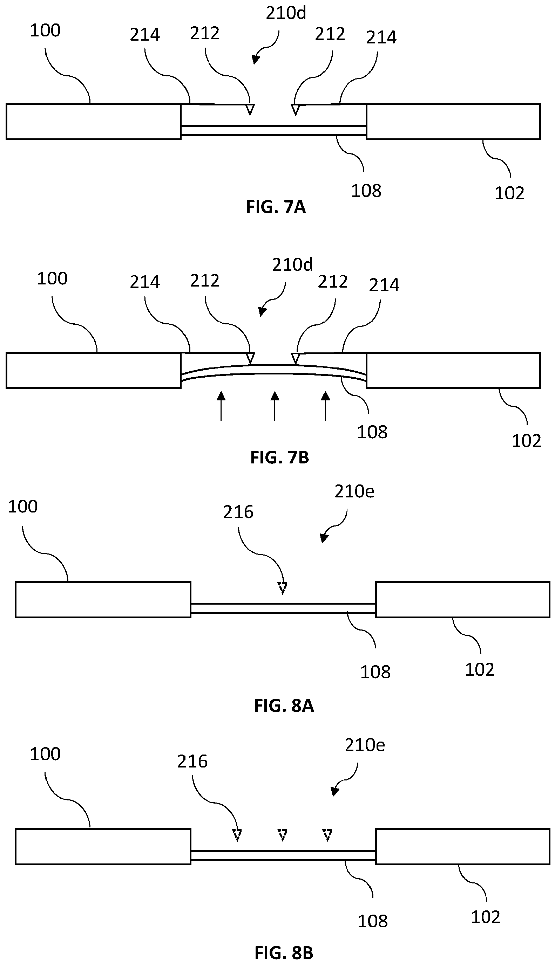

**FIGs. 7A** and **7B** schematically show cross-sectional views of a fourth example deformation detector **210d** of a system for monitoring a battery cell **100.** As shown in **FIG. 7A****,** the deformation detector **210c** comprises a plurality of contact sensors **212** arranged on respective cantilevered supports **214.** Similarly to **FIGs. 4A****,** **5A,** and **6A****,** the deformation detector **210d,** and in particular the contact sensors **212,** are arranged at a distance from the vent portion **108** of the battery cell **100** when the vent portion **108** is in the non-deformed position, which may correspond to a threshold deformation or may be less than the threshold deformation.

As shown in **FIG. 7B****,** when the vent portion **108** is in a sufficiently deformed position, one or more of the contact sensors **212** contact the vent portion **108.** The contact sensors **212** are therefore enabled to detect a deformation of the vent portion **108.** By implementing a plurality of contact sensors **212** arranged at different locations, irregular or unpredictable deformation of the vent portion **108** can be detected. Whilst two contact sensors **212** and cantilevered supports **214** are shown, it will be appreciated that any suitable number of contact sensors **212** and cantilevered supports **214** may be provided, and each support may be provided with more than one contact sensor **212.**

**FIGs. 8A** to **8C** schematically show cross-sectional views of a fifth example deformation detector **210e** of a system for monitoring a battery cell **100.** In these examples, the deformation detector **210e** comprises a non-contact sensor **216,** illustrated in dashed lines. The non-contact sensor **216** may be mounted at any suitable position relative to the battery cell **100** that enables it to detect a deformation of the vent portion **108.** For example, the non-contact sensor **216** may be mounted to the housing **102** of the battery cell **100,** or to another part of a battery pack or test environment. For example, any suitable design of the cap assembly or module top cover of the battery cell **100** may be employed. By using a non-contact sensor **216,** deformation of the vent portion **108** may be detected without interfering at all with the structure or function of the vent portion **108,** and the sensor may be positioned at any suitable distance from the vent portion **108,** increasing the flexibility of the implementation of the deformation detector **210e.**

The non-contact sensor **216** may comprise an optical sensor or a laser sensor capable of detecting a deformation of the vent portion **108** without contacting the vent portion **108.** The selection of a type of non-contact sensor **216** enables different devices to be used, for example in implementations requiring different levels of precision. Similarly to **FIGs. 4A** and **6A****,** the non-contact sensor **216** shown in **FIG. 8A** is disposed in a position corresponding substantially to the centre of the vent portion **108,** although it will be appreciated that the contact sensor **212** could be attached in any suitable position relative to the vent portion **108.**

As shown in **FIG. 8B****,** the deformation detector **210e** comprises a plurality of non-contact sensors **216** arranged at different locations relative to the vent portion **108.** By implementing a plurality of non-contact sensors **216** arranged at different locations, irregular or unpredictable deformation of the vent portion **108** can be detected. It will be appreciated that the plurality of non-contact sensors **216** can be arranged in any suitable form, for example in a line, a circle, a pattern, and the like, dependent on the expected points of deformation of the vent portion **108.** Whilst three non-contact sensors **216** are shown, it will be appreciated that any suitable number of non-contact sensors **216** may be provided.

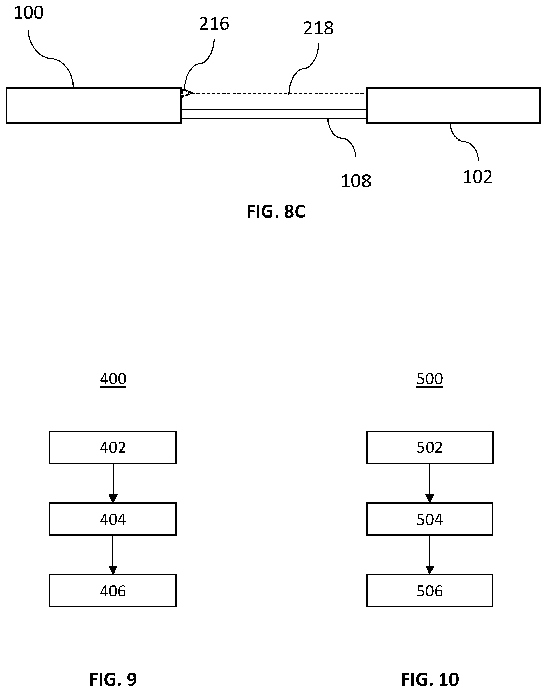

**FIG. 8C** shows an example where substantially the entire surface of the vent portion **108** can be monitored, for example by an optical sensor or a laser sensor. In this example, the non-contact sensor **216** may be arranged to monitor the vent portion **108** in a transverse direction **218** with respect to the battery call **100,** in order to detect deformation of the vent portion **108** in a longitudinal direction.

Deformation detectors **210** such as the deformation detectors **210a-e** shown in **FIGS. 4** to **8** enable early detection of potential venting of a battery cell **100** without interfering with the structure and function of the vent portion **108** and hindering its primary safety function. It will be appreciated that the deformation detectors **210a-e** shown in **FIGS. 4** to **8** could be combined in any suitable manner. For example, a deformation detector **210** may comprise any suitable number of contact sensors **212** and/or non-contact sensors **216** arranged in any suitable configuration.

In the case that a single contact sensor **212** or non-contact sensor **216** is used, the value measured by that sensor may be compared to the threshold deformation. If the value meets or is above the threshold, an action can be taken to prevent venting. In the case that a plurality of contact sensors **212** and/or non-contact sensors **216** are used, one, several or all of the values measured by the sensors may be compared to the threshold. For example, it may be determined that, for an action to be taken to prevent venting, only one sensor needs to detect a sufficiently large deformation. Alternatively, it may be determined that a subset of the sensors, for example two or more sensors, need to detect a sufficiently large deformation for an action to be taken to prevent venting. Alternatively, it may be determined that all of the sensors need to detect a sufficiently large deformation for an action can be taken to prevent venting. It may also be possible that different thresholds are used for different sensors. For example, different parts of the vent portion **108** may be allowed to undergo more deformation than others, and respective thresholds can be set accordingly.

**FIG. 9** is a flow chart of a method **400** for monitoring a battery cell **100.** The method **400** may be performed by the system **200** described in relation to **FIG. 3****.**

At **402,** a deformation of a vent portion **108** of the battery cell **100** is determined. The deformation is determined by a deformation detector **210,** such as one of the deformation detectors **210** described in relation to **FIGs. 4 to 8****.** The deformation detector **210** is arranged at a distance from the vent portion **108.** In some examples, the deformation is determined using at least one contact sensor **212** of the deformation detector **210.** In some examples, the deformation is determined using at least one non-contact sensor **216** of the deformation detector **210.**

At **404,** it is determined if the detected deformation meets a threshold deformation. The determination is performed using the processing circuity **220.** The determination of the threshold may be performed in the manner discussed above.

At **406,** if it is determined that the detected deformation meets the threshold deformation, an action is taken to prevent venting of the battery cell **100.** In one example, the action comprises electrically disconnecting the battery cell **100** to avoid further malfunction of the cell **100.**

The method **400** enables early detection of potential cell venting, which ensures that action can be taken before potentially dangerous material is discharged from the battery cell **100** and causes damage or contamination of surrounding parts of a battery pack or test facility. This can be performed without interfering with the structure of the vent portion **108** of the battery cell **100** and hindering its primary safety function. As another advantage, deformation of a vent portion **108** could be used as an indicator to replace aged cells by determining a cell aging state from the monitored deformation.

**FIG. 10** is a flow chart of a method **500** for monitoring a battery cell **100.** The method **500** may be performed by the processing circuity **220** of the system **200** described in relation to **FIG. 3****.**

At **502,** a signal representing deformation of a vent portion **108** of the battery cell 100 is received. The signal may be received from a deformation detector **210** configured to determine the deformation, such as one of the deformation detectors **210** described in relation to **FIGs. 4 to 8****.**

At **504,** it is determined if the detected deformation meets a threshold deformation. The determination of the threshold may be performed in the manner discussed above.

At **506,** if it is determined that the detected deformation meets the threshold deformation, an action is taken to prevent venting of the battery cell **100.** In one example, the action comprises sending a signal to electrically disconnect the battery cell **100** to avoid further malfunction of the cell **100.**

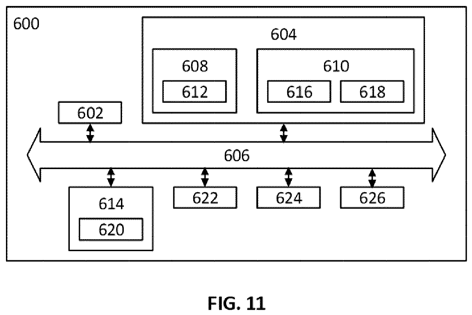

**FIG. 11** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device. The processing circuity **220** of the system **200** may be embodied by the processing circuitry **602.**

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1. A system (200) for monitoring a battery cell (100), the system comprising:
   a deformation detector (210) configured to be arranged at a distance from a vent portion (108) of the battery cell when the vent portion is in a non-deformed position and to detect a deformation of the vent portion; and
   processing circuity (220) for determining if the detected deformation meets a threshold deformation.
Example 2. The system (200) of example 1, wherein the deformation detector (210) comprises at least one contact sensor (212) configured to contact the vent portion (108) when the vent portion is in a deformed position.
Example 3. The system (200) of example 2, wherein the at least one contact sensor (212) is disposed in a cantilevered arrangement.
Example 4. The system (200) of example 3, wherein the at least one contact sensor (212) is disposed in a cantilevered arrangement from a housing (102) of the battery cell (100).
Example 5. The system (200) of any of examples 2 to 4, wherein the distance corresponds to the threshold deformation.
Example 6. The system (200) of any preceding example, wherein the deformation detector (210) comprises at least one non-contact sensor (216) configured to detect a deformation of the vent portion.
Example 7. The system (200) of example 6, wherein the non-contact sensor (216) comprises an optical sensor or a laser sensor.
Example 8. The system (200) of any of examples 2 to 7, wherein the deformation detector (210) comprises a plurality of sensors (212, 216)
Example 9. The system (200) of any preceding example, wherein the threshold deformation corresponds to a deformation of the vent portion (108) less than a deformation required for venting of the battery cell (100).
Example 10. The system (200) of any preceding example, wherein the threshold deformation is determined based on experimental or model data.
Example 11. The system (200) of any preceding example, wherein the threshold deformation comprises a plurality of threshold deformations.
Example 12. The system (200) of any preceding example, wherein the vent portion (108) is provided on an end side of the battery cell (100) comprising one or more electrical terminals.
Example 13. The system (200) of any preceding example, wherein the battery cell (100) is a prismatic cell, a cylindrical cell, or a pouch cell.
Example 14. The system (200) of any preceding example, wherein the battery cell (100) is comprised in a battery pack for a vehicle.
Example 15. A vehicle comprising the system (200) of any preceding claim.
Example 16. The system (200) of any of examples 1 to 14, wherein the battery cell (100) is in a test environment.
Example 17. A method (400) for monitoring a battery cell (100), the method comprising:
   determining (402) a deformation of a vent portion (108) of the battery cell at a deformation detector (210) arranged at a distance from a vent portion; and
   determining (404) if the detected deformation meets a threshold deformation.
Example 18. The method (400) of example 17, comprising determining the deformation using at least one contact sensor (212) of the deformation detector (210).
Example 19. The method (400) of example 17 or 18, comprising determining the deformation using at least one non-contact sensor (216) of the deformation detector (210).
Example 20. The method (400) of any of examples 17 to 19, further comprising taking an action (406) to prevent venting of the battery cell (100) in response to determining (404) that the detected deformation meets the threshold deformation.
Example 21. The method (400) of example 20, wherein taking an action (406) comprises electrically disconnecting the battery cell (100).
Example 22. A computer-implemented method (500) comprising, by processing circuitry of a computer system:
   receiving (502) a signal representing a deformation of a vent portion (108) of the battery cell from a deformation detector (210) arranged at a distance from a vent portion; and
   determining (504) if the detected deformation meets a threshold deformation.
Example 23. The computer-implemented method (500) of example 22, further comprising taking an action (506) to prevent venting of the battery cell (100) in response to determining (504) that the detected deformation meets the threshold deformation, for example sending a signal to electrically disconnect the battery cell (100).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (200) for monitoring a battery cell (100), the system comprising:
a deformation detector (210) configured to be arranged at a distance from a vent portion (108) of the battery cell when the vent portion is in a non-deformed position and to detect a deformation of the vent portion; and
processing circuity (220) for determining if the detected deformation meets a threshold deformation.

2. The system (200) of claim 1, wherein the deformation detector (210) comprises at least one contact sensor (212) configured to contact the vent portion (108) when the vent portion is in a deformed position.

3. The system (200) of claim 2, wherein the at least one contact sensor (212) is disposed in a cantilevered arrangement.

4. The system (200) of claim 2 or 3, wherein the distance corresponds to the threshold deformation.

5. The system (200) of any preceding claim, wherein the deformation detector (210) comprises at least one non-contact sensor (216) configured to detect a deformation of the vent portion.

6. The system (200) of claim 5, wherein the non-contact sensor (216) comprises an optical sensor or a laser sensor.

7. The system (200) of any of claims 2 to 6, wherein the deformation detector (210) comprises a plurality of sensors (212, 216)

8. The system (200) of any preceding claim, wherein the threshold deformation corresponds to a deformation of the vent portion (108) less than a deformation required for venting of the battery cell (100).

9. The system (200) of any preceding claim, wherein the threshold deformation comprises a plurality of threshold deformations.

10. A vehicle comprising the system (200) of any preceding claim.

11. A method (400) for monitoring a battery cell (100), the method comprising:
determining (402) a deformation of a vent portion (108) of the battery cell at a deformation detector (210) arranged at a distance from a vent portion; and
determining (404) if the detected deformation meets a threshold deformation.

12. The method (400) of claim 11, comprising determining the deformation using at least one contact sensor (212) of the deformation detector (210).

13. The method (400) of claim 11 or 12, comprising determining the deformation using at least one non-contact sensor (216) of the deformation detector (210).

14. The method (400) of any of claims 11 to 13, further comprising taking an action (406) to prevent venting of the battery cell (100) in response to determining (404) that the detected deformation meets the threshold deformation.

15. The method (400) of claim 14, wherein taking an action (406) comprises electrically disconnecting the battery cell (100).

## Amended claims

### Amended claims in accordance with Rule 137(2) EPC.

1. A system (200) for monitoring a battery cell (100), the system comprising:
a deformation detector (210) configured to be arranged at a distance from a vent portion (108) of the battery cell when the vent portion is in a non-deformed position and to detect a deformation of the vent portion, wherein the deformation detector comprises at least one contact sensor (212) disposed in a cantilevered arrangement and configured to contact the vent portion when the vent portion is in a deformed position; and
processing circuity (220) for determining if the detected deformation meets a threshold deformation.

2. The system (200) of claim 1, wherein the distance corresponds to the threshold deformation.

3. The system (200) of any preceding claim, wherein the deformation detector (210) comprises at least one non-contact sensor (216) configured to detect a deformation of the vent portion.

4. The system (200) of claim 3, wherein the non-contact sensor (216) comprises an optical sensor or a laser sensor.

5. The system (200) of any preceding claim, wherein the deformation detector (210) comprises a plurality of sensors (212, 216)

6. The system (200) of any preceding claim, wherein the threshold deformation corresponds to a deformation of the vent portion (108) less than a deformation required for venting of the battery cell (100).

7. The system (200) of any preceding claim, wherein the threshold deformation comprises a plurality of threshold deformations.

8. A vehicle comprising the system (200) of any preceding claim.

9. A method (400) for monitoring a battery cell (100), the method comprising:
determining (402) a deformation of a vent portion (108) of the battery cell at a deformation detector (210) arranged at a distance from a vent portion, wherein the deformation detector comprises at least one contact sensor (212) disposed in a cantilevered arrangement and configured to contact the vent portion when the vent portion is in a deformed position; and
determining (404) if the detected deformation meets a threshold deformation.

10. The method (400) of claim 9, further comprising determining the deformation using at least one non-contact sensor (216) of the deformation detector (210).

11. The method (400) of claim 9 or 10, further comprising taking an action (406) to prevent venting of the battery cell (100) in response to determining (404) that the detected deformation meets the threshold deformation.

12. The method (400) of claim 11, wherein taking an action (406) comprises electrically disconnecting the battery cell (100).
